# EUROPEAN PATENT APPLICATION

(11) **EP 0 718 765 A2**
(43) Date of publication of application: **26.06.1996**
(21) Application number: 95309235.0
(22) Date of filing: 19.12.1995
(51) Int. Cl.: G06F 11/10, G06F 3/06, G11B 20/18

(54) **Multi-flow disc array**

(30) Priority: 20.12.1994 IL 11209194
(71) Applicant: SCITEX CORPORATION LTD., Herzlia 46103 (IL)
(72) Inventor: Bronfeld, Joshua, 73130 Moshav Gimzo (IL)
(74) Representative: Hillier, Peter

(57) **Abstract**

A method for high speed data transfer is provided which includes providing a plurality of data storage devices arranged for parallel readout at high speed, providing at least one additional data storage device which provides redundancy for any of the plurality of data storage devices, reading in parallel from all but at least one of said plurality of data storage devices and from the additional data storage devices and simultaneously with reading, writing to the data storage device which is not currently being read.

## Description

### FIELD OF THE INVENTION

The present invention relates to high-speed data storage systems generally, and specifically to parallel arrays of computer disks.

### BACKGROUND OF THE INVENTION

High-speed data storage systems, including RAID (Redundant Array of Inexpensive Disks) storage systems, are well known in the art. RAID systems include CLARiiON Series 2000 available from Data General Corporation; MK/5 RAID and MR/5 available from Mega Drive Systems; and Rimfire 6700 available from Ciprico.

### SUMMARY OF THE INVENTION

Existing RAID products serve the increasing demand for storage capacity and speed of data transfer presented by the computer industry. However, the use of parallel disks also increases the cost to the user and therefore the issue of efficiency of this storage solution is of prime importance.

The present invention seeks to provide a high-speed data storage system with improved efficiency by increasing the overall throughput of a parallel disk array and utilizing simultaneous write and read operations.

There is thus provided in accordance with a preferred embodiment of the present invention a method for high speed data transfer including providing a plurality of data storage devices arranged for parallel readout at high speed, providing at least one additional data storage device which provides redundancy for any of the plurality of data storage devices, reading in parallel from all but at least one of the plurality of data storage devices and from the at least one additional data storage devices, and simultaneously with the reading, writing to the at least one data storage device which is not currently being read.

Further in accordance with a preferred embodiment of the present invention the reading and writing are repeated a plurality of times, in sequence, each time with a different at least one data storage device being written to and not being read.

Still further in accordance with a preferred embodiment of the present invention each of the plurality of data storage devices contains not only files currently being read but also files to be read in future.

There is also provided in accordance with another preferred embodiment of the present invention a high speed data transfer system including a plurality of data storage devices arranged for parallel readout at high speed, at least one additional data storage device which provides redundancy for any of the plurality of data storage devices, and a controller operative to read in parallel from all but at least one of the plurality of data storage devices and from the at least one additional data storage devices and, simultaneously with the reading, to write to the at least one data storage device which is not currently being read.

Further in accordance with a preferred embodiment of the present invention the controller is operative to read and write a plurality of times, in sequence, each time with a different at least one data storage device being written to and not being read.

Still further in accordance with a preferred embodiment of the present invention each of the plurality of data storage devices contains not only files currently being read but also files to be read in future.

### BRIEF DESCRIPTION OF THE DRAWINGS

The present invention will be understood and appreciated from the following detailed description, taken in conjunction with the drawings in which:
Fig. 1 is a simplified pictorial block diagram of a prior art computer system including a data storage system;
Fig. 2A is a simplified pictorial block diagram of a prior art RAID data storage system;
Fig. 2B is a simplified pictorial block diagram illustrating the operation of the prior art data storage system of Fig. 2A;
Fig. 3 is a simplified pictorial block diagram of a computer system including a high speed data storage system, constructed and operative in accordance with a preferred embodiment of the present invention;
Figs. 4A - 4E are simplified pictorial block diagrams illustrating the operation of the apparatus of Fig. 3;
Fig. 5 is a simplified pictorial block diagram of a portion of the apparatus of Fig. 3; and
Fig. 6 is a simplified flow chart illustrating a portion of the process performed by the apparatus of Fig 3.

### DETAILED DESCRIPTION OF PREFERRED EMBODIMENTS

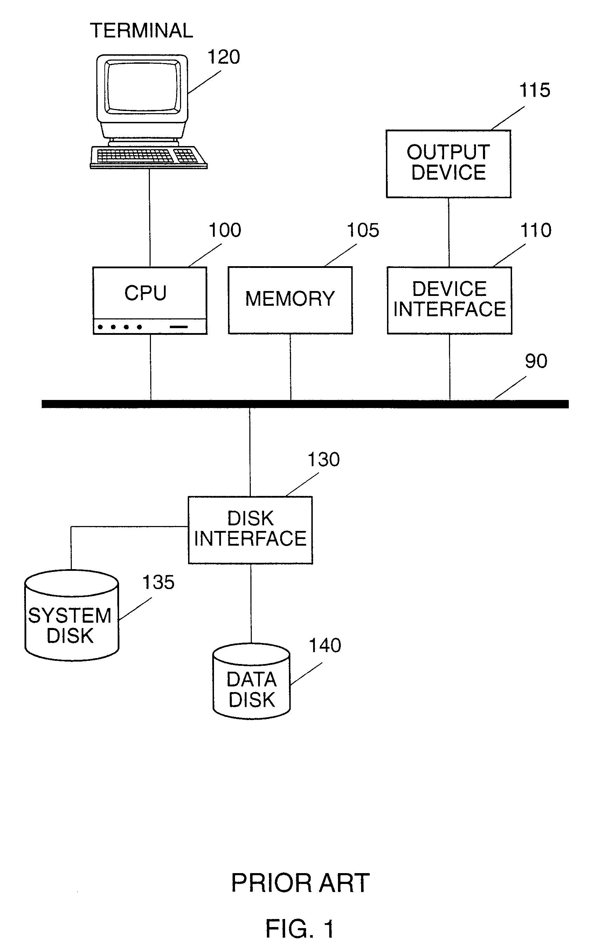

Reference is now made to Fig. 1 which is a simplified pictorial block diagram of a prior art computer system including a data storage system. The computer system of Fig. 1 comprises a high-speed bus 90 to which CPU 100, memory unit 105, and device interface 110 are electrically connected. The device interface 110 may be connected to any of a wide variety of devices, such as output device 115, which may be, for example, a high-speed printer. The CPU 100 may also be connected to other devices, such as terminal 120.

Also in electrical connection with the high-speed bus 90 is a disk interface 130. The disk interface 130 allows connection to a variety of disk storage devices, such as system disk 135 which typically stores operating system files and data disk 140 which typically stores data useful to programs running on the CPU 100.

The efficiency of data transfer to and from the data disk 140 in the prior art computer system of Fig. 1 is limited by the maximum transfer speed of the various system components found along the path from the CPU 100 to the data disk 140. Typically, the limiting speed is that of the path between disk interface 130 and the data disk 140, including the data transfer speed of the data disk 140. Often, the limiting factor is the maximum data transfer speed of the data disk 140.

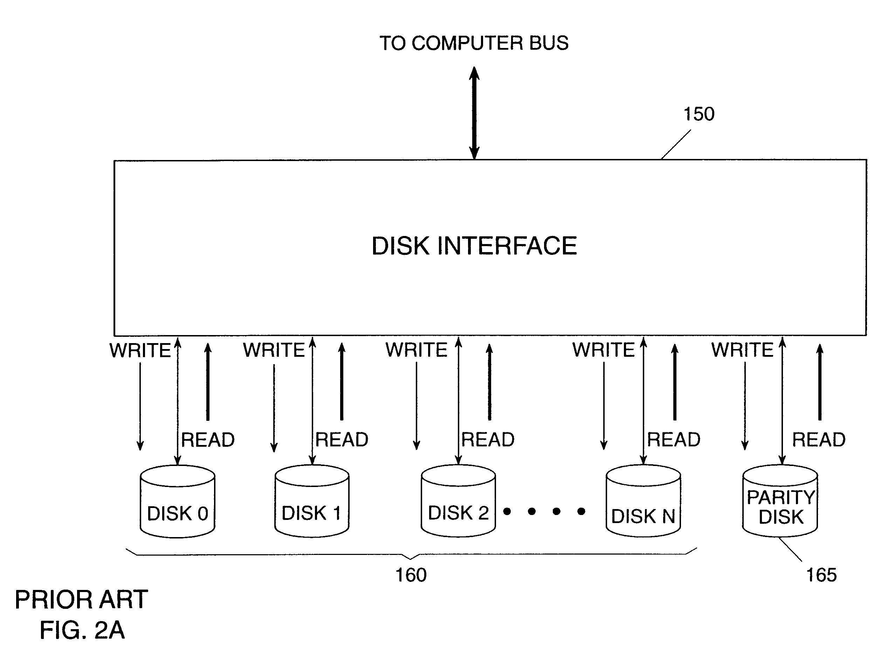

Reference is now made to Fig. 2A which is a simplified pictorial block diagram of a prior art RAID data storage system. In order to increase the efficiency of data transfer between the CPU 100 of Fig. 1 and the data storage devices, data disk interface 130 and data disk 140 are replaced with disk array interface 150 and a plurality of data disks 160. The apparatus of Fig. 2A also comprises a parity disk 165.

The increase in maximum data transfer speed may be understood as follows. The plurality of data disks 160 may, for example, comprise N disks and each of the N disks may have the same maximum data transfer speed S. If the disk array interface 150 and associated data connections have a maximum data transfer speed of N*S, then the redundant array of disks of Fig. 2A will have N times the maximum data transfer speed of a single disk.

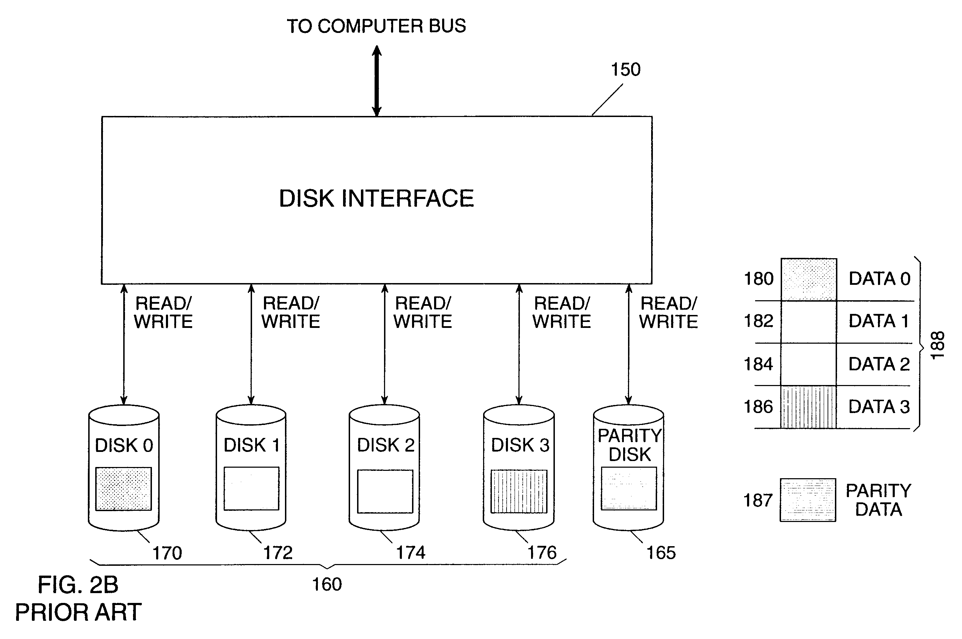

Reference is now made to Fig. 2B which is a simplified pictorial block diagram illustrating the operation of the prior art storage system of Fig. 2A. In Fig. 2B data disk 170, data disk 172, data disk 174, and data disk 176 are illustrated to depict the case where there are four disks corresponding to the plurality of data disks 160 of Fig. 2A. It is appreciated that the choice of four disks is for illustrative purposes only and that more or fewer than four disks may be present. The apparatus of Fig. 2B also comprises parity disk 165.

Associated respectively with the data disks 170, 172, 174, and 176 are data segments 180, 182, 184, and 186. Collectively, the data segments 180, 182, 184, and 186 constitute data file 188. In Fig. 2B, a simple case of only four data segments is illustrated. Preferably, data file 188 may comprise a multiplicity of data segments grouped into four groups, with the four groups being associated respectively with the four data disks 170, 172, 174, and 176.

Based on the above, it will be appreciated that if, for example, the data file 188 is to be written from the CPU to the data disks 170, 172, 174, and 176, a plurality of the data segments 180, 182, 184, and 186 may be written to the associated data disks in parallel, thus increasing the potential maximum data transfer speed.

In addition to data segments described above, parity data is stored on parity disk 165. The stored parity data 187 provides sufficient information to reproduce all of the information on any single one of the data disks 160, so that the temporary or permanent unavailability of any single one of the data disks 160 will not lead to a loss of data. There are a number of methods, well known in the art, for generating the parity data. One possible method is as follows:

The parity bit corresponding to a set of data bits from each of the data disks 160 is formed by the exclusive-or, also known herein as XOR, of the data bits. For example:

| Data disk 170 | Data disk 172 | Data disk 174 | Data disk 176 | Parity disk XOR 178 |
|---|---|---|---|---|
| 1 | 1 | 0 | 1 | 1 |
| 0 | 1 | 0 | 1 | 0 |
| 0 | 0 | 1 | 0 | 1 |

It will be seen that the loss or temporary unavailability of a single one of the data disks 160 will not lead to a loss of data. For example, if data disk 172 becomes lost or temporarily unavailable, the resulting data will be:

| Data disk 170 | Data disk 172 | Data disk 174 | Data disk 176 | Parity disk XOR 178 |
|---|---|---|---|---|
| 1 | ? | 0 | 1 | 1 |
| 0 | ? | 0 | 1 | 0 |
| 0 | ? | 1 | 0 | 1 |

Since, in each row, three of the four data bits as well as the parity XOR value are known, the missing data bit can be reconstructed as being the data bit which would produce the known parity XOR value. The missing data bit can be computed as the XOR of the known data bits and the parity XOR bit.

It is appreciated that a number of other methods for reconstructing lost data bits are well known in the art, including, for example, error-correcting codes or ECC. The various known methods have advantages and disadvantages. For example, ECC may be capable of fixing more types of errors than the parity method described here but ECC is generally more expensive to implement.

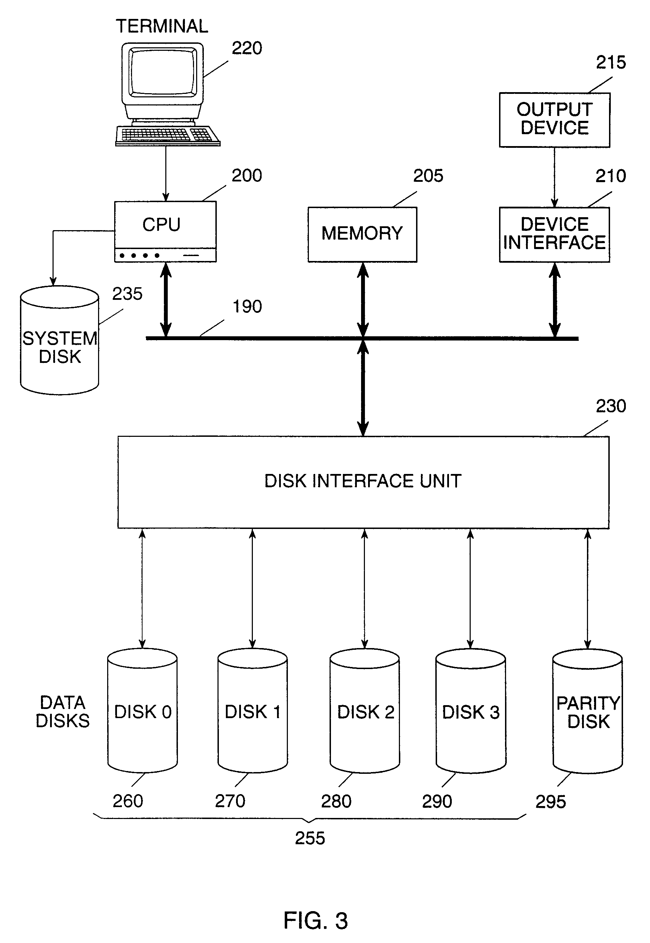

Reference is now made to Fig. 3 which is a simplified pictorial block diagram of a computer system including a high speed data storage system, constructed and operative in accordance with a preferred embodiment of the present invention. The computer system of Fig. 3 comprises a high-speed bus 190 to which CPU 200, memory unit 205, and device interface 210 are electrically connected. The device interface 210 may be connected to any of a wide variety of devices, such as output device 215, which may be, for example, a high-speed printer. The CPU 200 may also be connected to other devices, such as terminal 220.

The system of Fig. 3 further comprises a system disk 235 which typically stores operating system files. In Fig. 3, system disk 235 is shown as connected directly to the CPU 200, but it is appreciated that the system disk 235 may be connected to the CPU 200 through a disk interface or by any other appropriate means.

The system of Fig. 3 further comprises a disk interface 230. The disk interface 230 provides electrical connection and signal mediation and transmission between the high-speed bus 190 and disk storage devices. The disk interface 230 is also operative to check the correctness of parity data during reading.

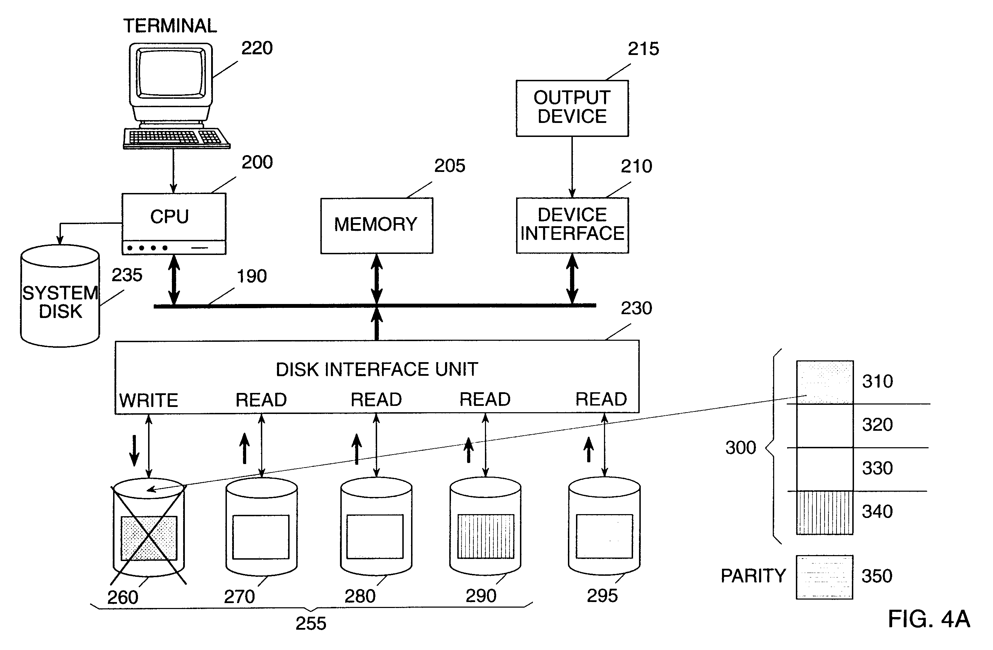

In accordance with a preferred embodiment of the present invention, the disk interface 230 is operative in a first mode to write parity data computed by the CPU. When the system of Fig. 3 operates in a second mode, conventional RAID mode as described below, the disk interface 230 automatically generates parity data during writing. In both modes, the generating and detecting are for the purpose of identifying and correcting possible data storage errors as described above with reference to Fig. 2B. The generating and detecting are also utilized as described below with reference to Figs. 4A - 4E.

The system of Fig. 3 further comprises, as disk storage devices, data disks 255 comprising data disk 260, data disk 270, data disk 280 and data disk 290. Parity disk 295 serves as parity. Data is stored on and read from the data disks 255. Parity data is stored on and read from the parity disk 295.

The operation of the system of Fig. 3 is now briefly described. Except as described below, the operation of the system of Fig. 3 is similar to that described above with respect to the prior art system of Figs. 2A and 2B. In this case the system of Fig. 3 is said to operate in conventional RAID mode.

Reference is now made to Figs. 4A - 4E which are simplified pictorial block diagrams illustrating the operation of the apparatus of Fig. 3. File 300 comprises data segments 310, 320, 330 and 340, which data segments are associated respectively with the data disks 260, 270, 280, and 290.

Additionally, parity segment 350, which is computed from the file 300, is associated with the parity disk 295. The parity segment 350 is computed by the CPU 200 as described below, except when the system is operating in conventional RAID mode. In conventional RAID mode, the parity data is generated automatically by the disk interface 230.

Fig. 4A depicts the beginning of a write operation to the data disks 255, which is to take place simultaneously with an ongoing read operation from the same group. For maximum data transfer throughput, as described above with reference to Figs. 2A and 2B, reading occurs in parallel from the plurality of data disks 255.

In order to allow writing to occur simultaneously with the read operation, the file 300 to be written is written one segment at a time. During the writing of segment 310 to data disk 260, reading from data disk 260 is suspended. During the writing, the parity information stored on the parity disk 295 is used to reconstruct the data which cannot be read from the data disk 260. The method used to reconstruct the data on the data disk 260 is similar to the method described above with reference to Fig. 2B in the case of an unavailable disk.

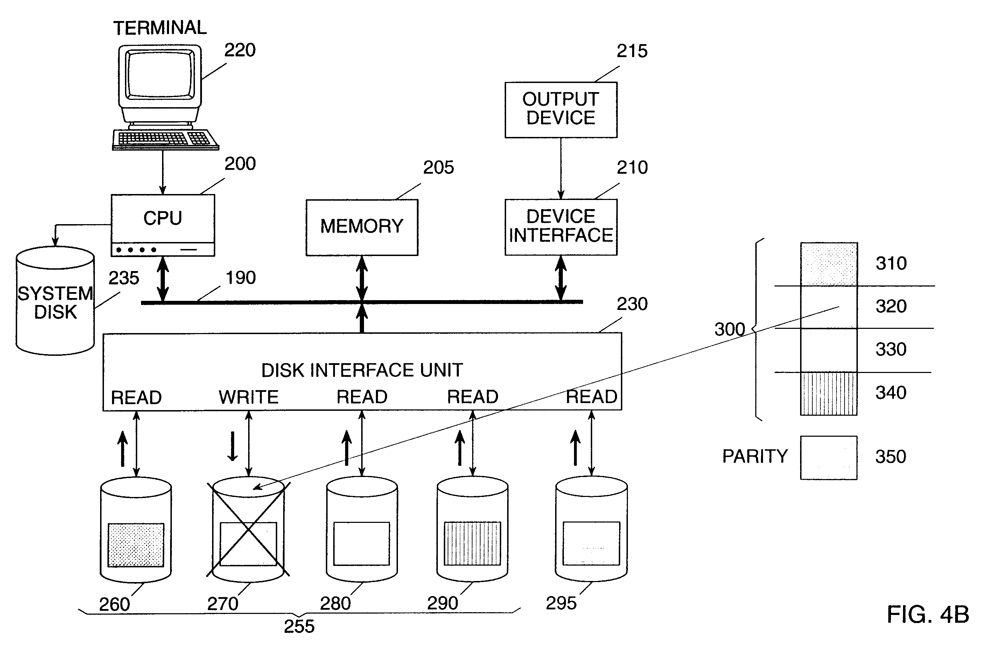

When the writing of the file segment 310 is completed, the writing of the file segment 320 begins. Fig. 4B depicts the writing of the file segment 320. During the writing, the parity information stored on the parity disk 295 is used to reconstruct the data which cannot be read from the data disk 270 due to the writing occurring on the same data disk. The method used to reconstruct the data on the data disk 270 is similar to the method described above with reference to Fig. 2B in the case of an unavailable disk.

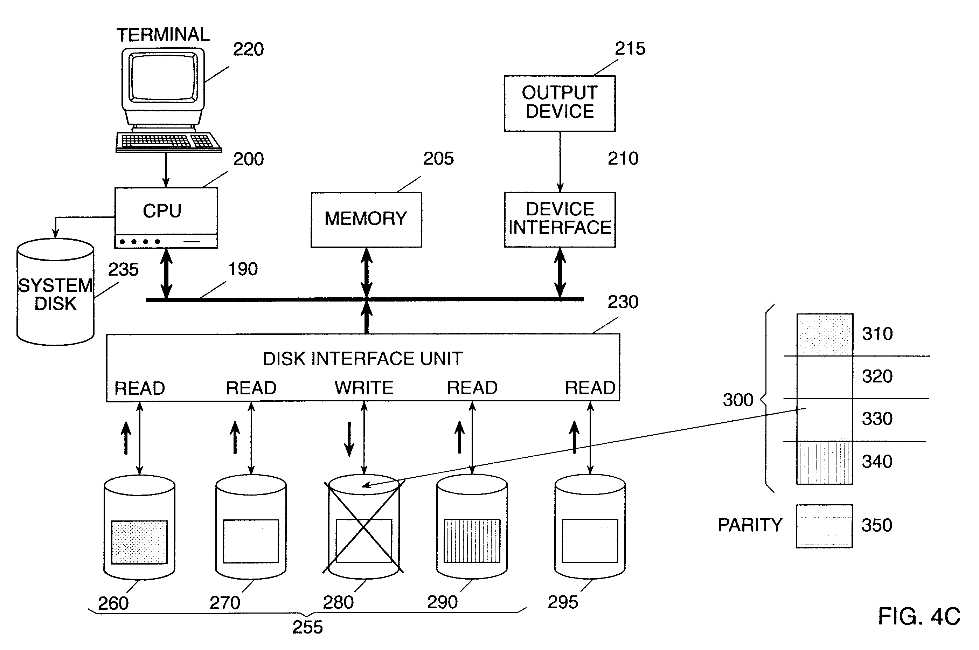

When the writing of the file segment 320 is completed, the writing of the file segment 330 begins. Fig. 4C depicts the writing of the file segment 330. During the writing, the parity information stored on the parity disk 295 is used to reconstruct the data which cannot be read from data disk 280. The method used to reconstruct the data on the data disk 280 is similar to the method described above with reference to Fig. 2B.

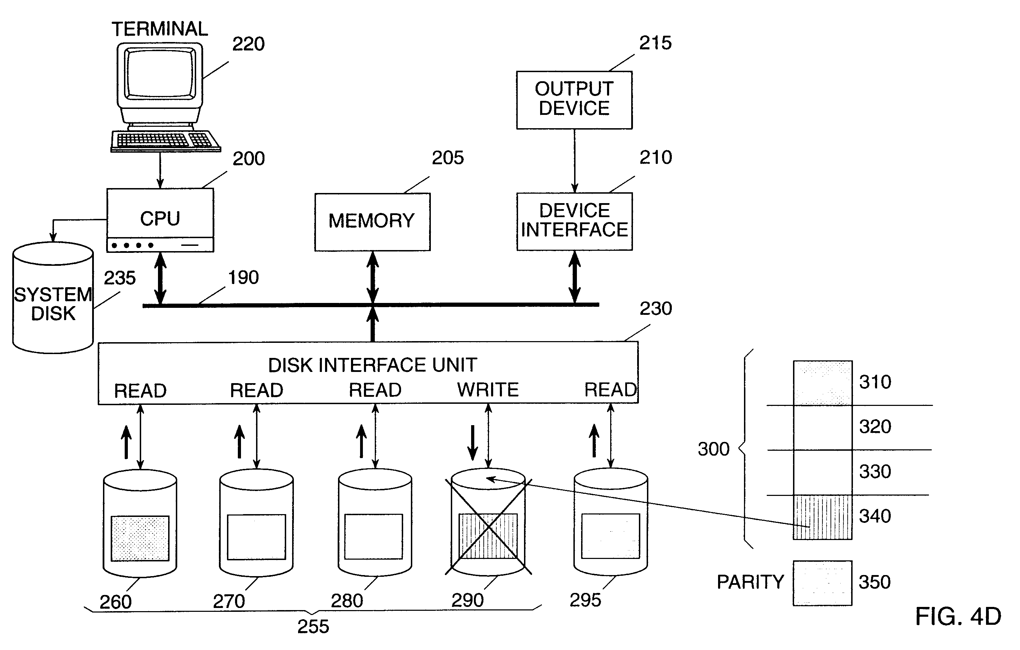

When the writing of the file segment 330 is completed, the writing of the file segment 340 begins. Fig. 4D depicts the process for data segment 340 and disk 290.

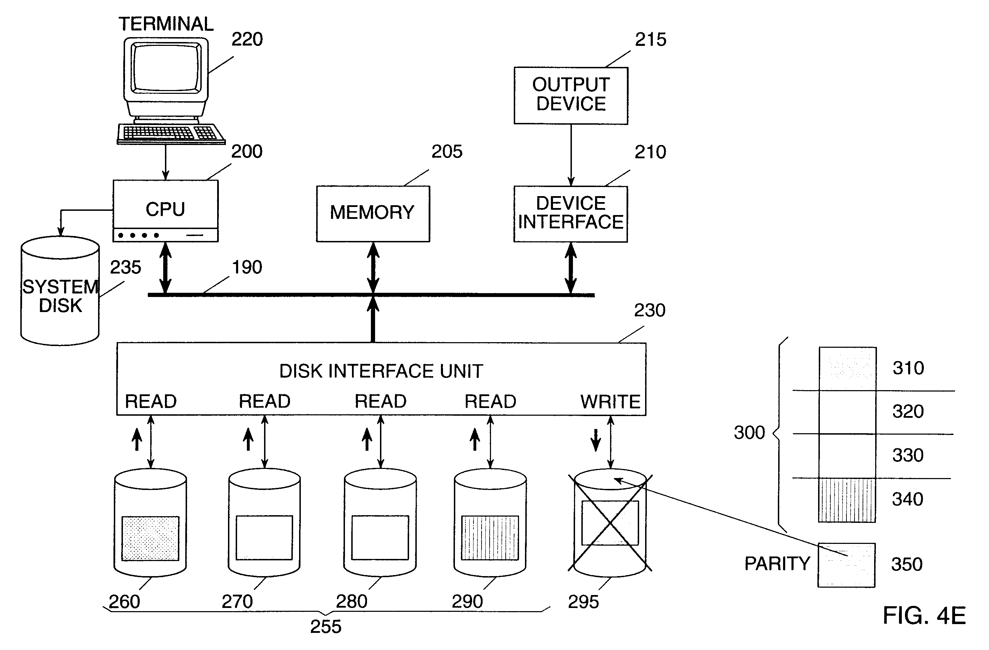

When the writing of the file segment 340 is completed, the writing of the parity data 350 begins. Fig. 4E depicts the writing of the parity data 350. Prior to the process of writing as described above with reference to Figs. 4A - 4D, the parity data 350 is computed by the CPU 200 by XORing the data of segments 310 to 340. The parity data 350 is now written to the parity disk 295. No read process is necessary from the parity disk 295, as all of the data is already available directly from the data disks 255.

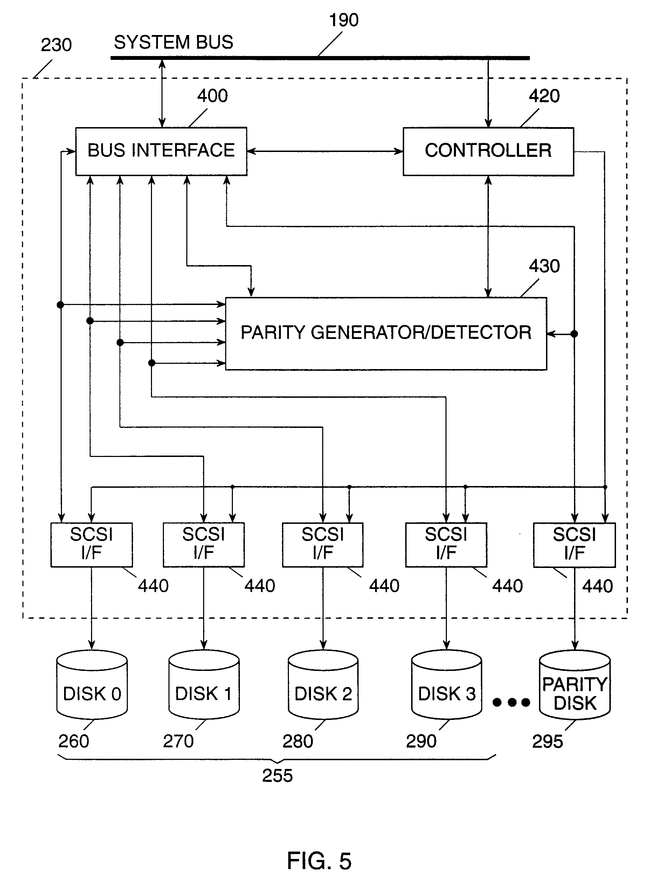

Reference is now made to Fig. 5, which is a detailed depiction of the disk interface unit 230 of Fig. 3

The purpose of the disk interface unit 230 is to:
a. allow direct data flow between system bus 190 and disks 260, 270, 280, 290, and parity disk 295 via the SCSI interface 440;
b. allow direct data flow as in part "a" above except that the parity data is generated by the parity generator/detector unit 430;
c. reconstruct via the parity generator/detector 430 the data of an unavailable disk, using the parity data; and
d. allow the unit 430 to detect data errors of the disks 255 using the data of the parity disk.

Controller 420 is used to coordinate and program the various elements of unit 230.

Parity generator/detector unit 430 can be constructed, for example, by using several chips No. SN74LS636, manufactured by Texas Instruments, Inc., USA, and other standard logic chips as needed.

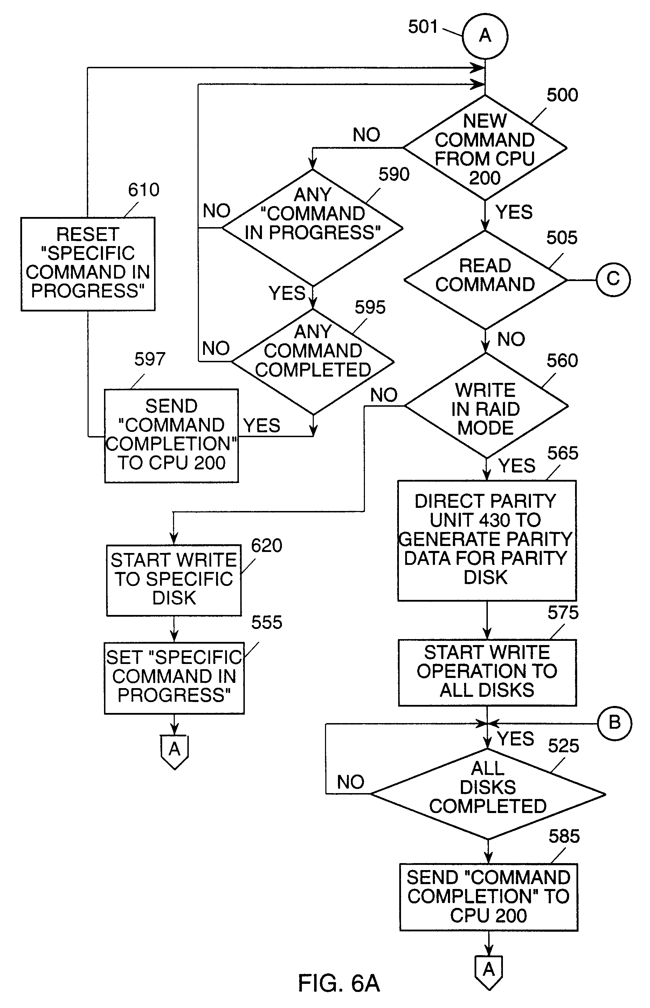

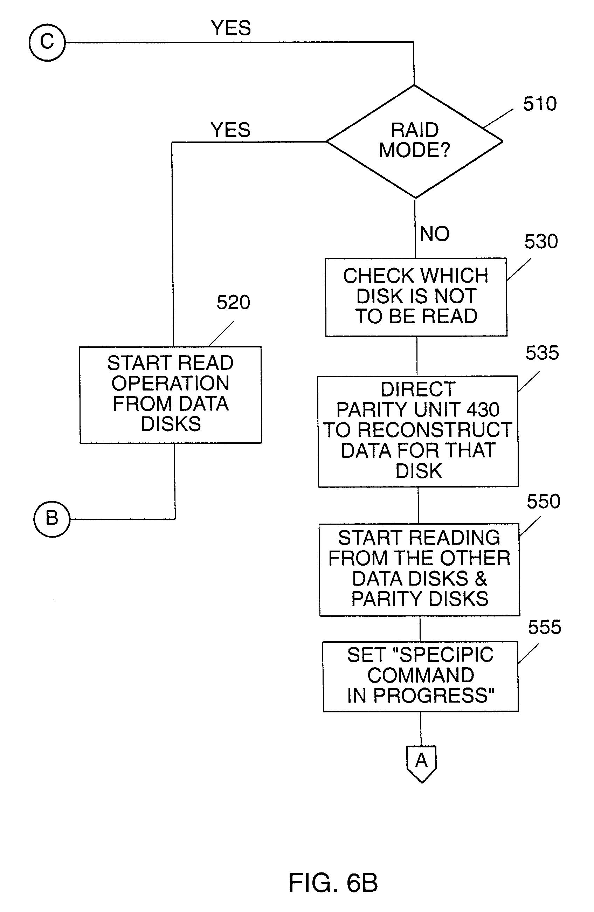

Fig. 6 describes the data flow and control method of unit 230 of Fig. 5, implementing the operation modes described above.

"A" 501 is the entrance of the main loop.

Step 500 checks if a new command was received from the CPU 200. If positive, continue to step 505 and check for read command. If positive, continue to step 510 and check for "RAID mode". If positive, continue to step 520 and start the read operation from data disks 255. Continue to step 525 and repeat until completion. On completion step 585 sends a status "command completion" to the CPU 200, and continues to the main loop 501.

Back to step 510, in case of no "RAID mode" continue to step 530 and check which disk is unavailable for read operation, i.e., is in the process of writing. Step 535 directs the parity unit 430 to reconstruct data for that disk. Step 550 starts the read operation from the other data disks and the parity disk. In step 555 set a "command in progress" flag and follow to the main loop 501.

In case of no "read command" at step 505 follow to step 560 and check for "RAID mode" write operation. If positive, step 565 directs parity unit 430 to generate the parity data for the parity disk. Next go to step 575 and start the "write" operation to all disks 255 and parity disk 295. Continue to step 525 as described above.

Back to step 560, in case of no "RAID mode" write operation, go to 620 and start the write operation to the specific disk. Follow to step 555 as described above.

Back to step 500: in case that no new command is issued by the CPU 200 follow to step 590 and check if "command in progress" is set. If positive, check in step 595 if any of the commands set by step 555 was completed. If positive, step 597 sends the "command completion" to the CPU 200. Reset the specific "command in progress" in step 610 and return to the main loop 501.

Back to step 595: If negative, return to 501; the same in step 590.

It is appreciated that the software components of the present invention may, if desired, be implemented in ROM (read-only memory), in RAM, or in hardware.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited to what has been particularly shown and described hereinabove. Rather, the scope of the present invention is defined only by the claims that follow:

## Claims

1. A method for high speed data transfer comprising:
a. providing a plurality of data storage devices arranged for parallel readout at high speed;
b. providing at least one additional data storage device which provides redundancy for any of the plurality of data storage devices;
c. reading in parallel from all but at least one of said plurality of data storage devices and from said at least one additional data storage devices; and
d. simultaneously with said reading, writing to said at least one data storage device which is not currently being read.

2. A method according to claim 1 and wherein said reading and writing are repeated a plurality of times, in sequence, each time with a different at least one data storage device being written to and not being read.

3. A method according to either of claims 1 and 2 wherein each of said plurality of data storage devices contains not only files currently being read but also files to be read in future.

4. A high speed data transfer system comprising:
a. a plurality of data storage devices arranged for parallel readout at high speed;
b. at least one additional data storage device which provides redundancy for any of the plurality of data storage devices; and
c. a controller operative to read in parallel from all but at least one of said plurality of data storage devices and from said at least one additional data storage devices and, simultaneously with said reading, to write to said at least one data storage device which is not currently being read.

5. A system according to claim 4 and wherein said controller is operative to read and write a plurality of times, in sequence, each time with a different at least one data storage device being written to and not being read.

6. A system according to claim 4 and wherein each of said plurality of data storage devices contains not only files currently being read but also files to be read in future.

7. A system according to claim 5 and wherein each of said plurality of data storage devices contains not only files currently being read but also files to be read in future.
